# EUROPÄISCHE PATENTSCHRIFT

(11) **EP 0 971 213 B1**
(45) Veröffentlichungstag und Bekanntmachung des Hinweises auf die Patenterteilung: **17.04.2002**
(21) Anmeldenummer: 99112591.5
(22) Anmeldetag: 01.07.1999
(51) Int. Cl.: G01F 23/284, H01Q 13/06

(54) **Mikrowellen-Füllstandsmessgerät mit verbesserter Signalqualität**
Microwave content level measurement apparatus with improved signal quality
Appareil à micro-ondes de mesure de niveau de contenu avec qualité de signal améliorée

(30) Priorität: 06.07.1998 DE 29812024 U
(43) Veröffentlichungstag der Anmeldung: 12.01.2000
(73) Patentinhaber: VEGA Grieshaber KG, 77709 Wolfach (DE)
(72) Erfinder: Motzer, Jürgen Dipl.-Ing.FH, 77723 Gengenbach (DE)
(74) Vertreter: Maiwald, Walter, Dr. Dipl.-Chem.

(56) Entgegenhaltungen:
- EP-A- 0 444 834
- WO-A-98/14762

## Beschreibung

Die Erfindung liegt auf dem Gebiet der berührungslosen Messung von Materialfüllständen in Behältern unter Verwendung der Mikrowellenmeßtechnik und betrifft insbesondere ein Mikrowellen-Füllstandsmeßgerät der im Oberbegriff des unabhängigen Schutzanspruchs definierten Art, welches eine verbesserte Signalqualität, insbesondere durch verringertes "Klingeln" bzw. Rauschen ermöglicht.

Es gibt eine Vielzahl von unterschiedlichen Meßprinzipien, und darauf basierenden Meßgeräten, um den Füllstand von Füllgütern in Behältern zu messen. Mikrowellen-Füllstandsmeßgeräte auf der Basis eines frei abgestrahlten und, nach Reflexion von der Füllgutoberfläche, wieder empfangenen Mikrowellensignals haben sich hierbei wegen der berührungslosen und für praktisch alle Füllgüter tauglichen Meßtechnik als besonders vorteilhaft erwiesen.

Das Mikrowellensignal wird bei dieser Meßtechnik über eine Antenne ausgesendet und das von der Füllgutoberfläche reflektierte Mikrowellensignal anschließend von der Antenne empfangen. Aus einer Messung der Laufzeit des Mikrowellensignals wird die Füllguthöhe im Behälter bestimmt.

Die Antenne zum Aussenden und Empfangen des Mikrowellensignals eines solchen im Stand der Technik bekannten Meßgerätes wird für den Aussendevorgang von einer Antennenspeisung mit den Mikrowellensignalen versorgt. Die Antennenspeisung umfaßt zumeist einen zum Teil gefüllten Hohlleiter, der durch einen den Hohlleiter umgebenden, im von der Antenne abgewandten Bereich zylindrischen Hohlleitermantel ausgebildet wird. Gewöhnlicherweise weitet sich der Hohlleitermantel, meist in kegelförmiger Geometrie, in einem an den zylindrischen Bereich anschließenden Bereich in Richtung auf die das Mikrowellensignal fokussierende Antenne auf. Die Hohlleiterfüllung ist hauptsächlich innerhalb des zylindrischen Bereichs des Hohlleitermantels angeordnet. In ihrem antennenwärts gerichteten Endbereich weist die Hohlleiterfüllung ein Anpaßteil auf, welches als "Taper" bezeichnet wird. Der Taper erstreckt sich in den Aufweitungsbereich des Hohlleitermantels hinein und ist meist von etwa kegelförmiger Gestalt, die sich zur Antenne hin verjüngt.

Herkömmliche Antennenspeisungen sind dergestalt aufgebaut, daß der Übergang der Hohlleiterfüllung zum Taper (also die Grundfläche des Taperkegels) genau dort liegt, wo der Hohlleitermantel beginnt, sich antennenwärts trichterförmig aufzuweiten.

Der Umfang der Taper-Grundfläche und der dortige Innenumfang des Hohlleitermantels sind dann gleich.

Um ein Mikrowellensignal auszusenden, wird das Mikrowellensignal in die Hohlleiterfüllung über einen Erregerstift eingekoppelt und dann über den Taper der Antenne elektrisch angepaßt.

Erfahrungsgemäß ist trotz der elektrischen Anpassung des Mikrowellensignals an die Antenne der Übergang mit unerwünschten Reflexionen ("Klingeln") behaftet. Dies wirkt sich zum einen nachteilig auf die übertragene Mikrowellenleistung aus und setzt zum anderen die Güte des gemessenen reflektierten Mikrowellensignals durch das hieraus erzeugte gerätebedingte "Rauschen" herab. Inbesondere wird dadurch vor allem die Qualität der Messungen im Nahbereich aufgrund der, durch relativ kurze Signallaufzeiten bedingten Überlagerung mit dem "Rauschen" verschlechtert.

Es hat sich früher bereits gezeigt, daß diese unerwünschten Reflexionen des Mikrowellensignals umso stärker sind, je größer der Unterschied in den dielektrischen Eigenschaften zwischen dem Tapermaterial und der Luft ist.

Daher hat man bisher versucht, dieses Problem zu bewältigen, indem man für den Taper Materialien wählte, die in ihren dielektrischen Eigenschaften, jeweils charakterisiert durch deren Permittivitätszahl (εᵣ), den dielektrischen Eigenschaften von Luft (εᵣ ≈ 1) möglichst ähneln.

Als Material für den Taper hat sich dabei z.B. Teflon bewährt, dessen Permittivitätszahl (εᵣ ≈ 2,3) nahe der Permittivitäszahl von Luft liegt.

Jedoch sind die unter diesem Aspekt ausgewählten Materialien nicht für alle praktischen Anwendungen gleichermaßen geeignet. Es wäre deshalb äußerst wünschenswert, über eine Vorrichtung zu verfügen, die es erlaubt, unabhängig von dem verwendeten Tapermaterial, d.h. vor allem auch bei Verwendung von Materialien wie etwa Keramik mit einer im Vergleich zu Luft deutlich unterschiedlichen Permittivitätszahl εᵣ, diese unerwünschten Reflexionen zu vermindern oder sogar ganz zu vermeiden.

In WO 98/57392 wird vorgeschlagen, bei einem Mikrowellen-Füllstandsmeßgerät mit Hornantenne die Antenne im Endbereich des Hohlleiters so ansetzen zu lassen, daß sich zwischen Hohlleiter und Antenne ein Ringspalt bildet, der im Betrieb mit einem Kondensat gefüllt sein soll. Ein Taper soll am Ende des Hohlleiters so angeordnet werden, daß er außerhalb des Kondensat-gefüllten (Teils des) Ringspaltes liegt. Da die mehr oder weniger große Anfüllung des Ringspaltes von den Benetzungseigenschaften und der Viskosität des Kondensats abhängt, liegt die Anordnung des Tapers damit nicht eindeutig fest. Zudem erfordert diese Lehre zwangsweise die Ansammlung von Kondensat im Füllstandsmeßgerät, also von dem flüssigen Material, dessen Füllstand gemessen werden muß. Das ist nicht nur nicht immer realisierbar (da bei manchen Flüssigkeiten keine Kondensation erfolgt), sondern auch generell unerwünscht, weil jede Kondensatbildung im Meßgerät eine Störung darstellt.

Aufgabe der Erfindung ist es, ein Mikrowellen-Füllstandsmeßgerät der eingangs genannten Art zu schaffen, das materialunabhängig eine verbesserte Signalqualität, insbesondere bei verringertem "Klingeln" bzw. Rauschen, ermöglicht. Insbesondere ist es Aufgabe der Erfindung, ein gattungsgemäßes Füllstandsmeßgerät zu schaffen, das eine verbesserte Signalqualität unabhängig von der Art des Materials ermöglicht, dessen Füllstand zu messen ist.

In völlig überraschender Weise und für den Fachmann unerwartet hat sich gezeigt, daß die Signalqualität erheblich verbessert werden kann, insbesondere die bei Übergang auf die Antenne auftretenden unerwünschten Reflexionen vermindert werden können, wenn die geometrische Anordnung von Hohlleiter und Hohlleiterfüllung, hierbei insbesondere in bezug auf den Taper, gegenüber der herkömmlichen Bauart verändert wird.

Zur Lösung der Aufgabe ist daher bei einem gattungsgemäßen Mikrowellen-Füllstandsmeßgerät vorgesehen, daß der Hohlleitermantel in der Ebene der Grundfläche des Tapers innenseitig einen größeren Umfang aufweist als die Grundfläche des Tapers oder sich in der Ebene der Grundfläche des Tapers bis zu einem solchen größeren Umfang erstreckt.

Die Grundfläche (und damit die Oberfläche) des Tapers berührt also den - von ihr beabstandeten - Hohlleitermantel nicht, in dem der Endbereich der Hohlleiterfüllung mit dem daran angeordneten Taper sich, antennenwärts, frei in einen vom Hohlleitermantel umgrenzten Raum hinein erstreckt, oder der Hohlleitermantel umschließt die Hohlleiterfüllung anliegend nur bis zur Grundfläche des Tapers, bildet in deren Ebene eine Ringschulter und erstreckt sich dann entsprechend vom Taper beabstandet vom radial auswärtigen Rand der Ringschulter antennenwärts.

Die erfmdungsgemäße Bauweise ergibt eine Signalverbesserung unabhängig von Kondensationsproblemen - also insbesondere auch da, wo keine Kondensation von Meßgut am Gerät zu erwarten ist.

Die gegenwärtig mehr bevorzugte Ausführungsform der Erfindung sieht vor, daß der Hohlleitermantel in der Ebene der Tapergrundfläche einen Abstand von der Tapergrundfläche aufweist. Dies bedeutet, daß der Übergang von der Hohlleiterfüllung zum Taper, also die Tapergrundfläche, im Unterschied zum Stand der Technik, nicht in dem Bereich liegt, wo der Hohlleitermantel erst beginnt, sich antennenwärts, meist trichterförmig, aufzuweiten. Statt dessen liegt der Übergang in axialer Richtung des Tapers antennenwärts versetzt hinter dem Beginn dieser Aufweitung.

Diese Ausführungsform wird besonders bevorzugt auch dort verwendet, wo Kondensatbildungen der in WO98/57392 behandelten Art keine Rolle spielen.

Eine andere, gegenwärtig weniger bevorzugte Ausführungsform sieht vor, daß der Hohlleitermantel in der Ebene der Grundfläche des Tapers eine Erstreckung in Richtung der Tapergrundfläche aufweist. Dies besagt, daß der Hohlleitermantel im Unterschied zum Stand der Technik nicht am Umfang der Grundfläche des Tapers beginnt, sich antennenwärts trichterförmig aufzuweiten. Erst nach zur axialen Richtung des Tapers senkrechtem radial auswärts gerichtetem Verlauf des Hohlleitermantels beginnt der Hohlleitermantel, wieder antennenwärts zu verlaufen und sich ggf. trichterförmig aufzuweiten.

Diese Ausführungsform kann z.B. statt der in WO98/57392 beschriebenen verwendet werden, um Kondensatbildungen zu vermeiden bzw. unschädlich zu machen.

Die Erfindung soll an den folgenden beiden Ausführungsformen weiter erläutert werden. (Hierbei erhalten gleichartige Geräteelemente analoge Bezugszeichen.)

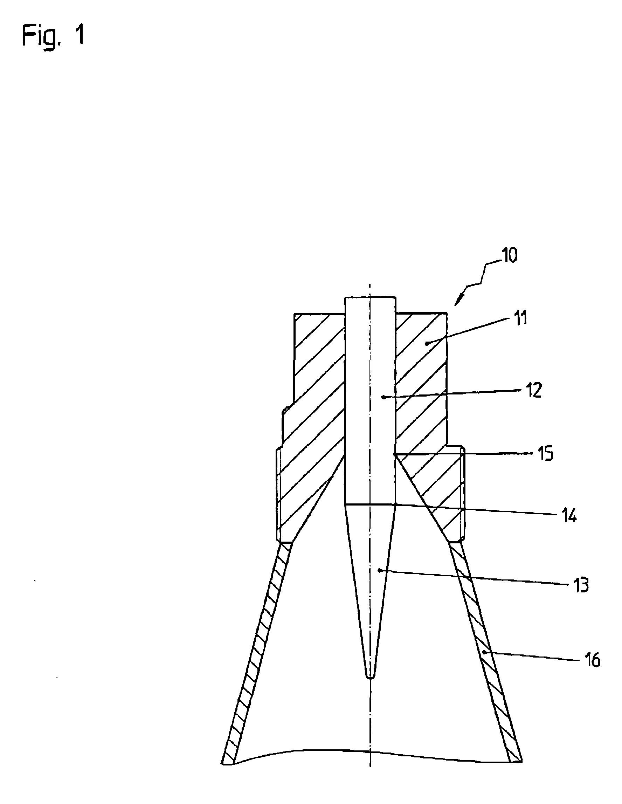

Fig. 1 zeigt schematisch eine erfindungsgemäße Ausführungsform der Sende-/Empfangsvorrichtung eines Mikrowellen-Füllstandsmeßgerätes. Die Sende-/Empfangsvorrichtung setzt sich aus Antennenspeisung (10) und Antenne (16) zusammen. Die Antennenspeisung besteht aus einem Hohlleitermantel (11) und einer Hohlleiterfüllung (12) mit dem als Taper (13) ausgeformten Anpaßteil. Der Taper (13) spitzt sich kegelförmig zu. Er ist über seine Grundfläche (14) mit der Hohlleiterfüllung (12) verbunden. Wie aus Fig. 1 ersichtlich, ist die Grundfläche (14) des Tapers (13) von dem Bereich (15), in dem der Hohlleitermantel (11) beginnt, sich trichterförmig aufzuweiten, antennenwärts in axialer Richtung des Tapers (13) versetzt angeordnet.

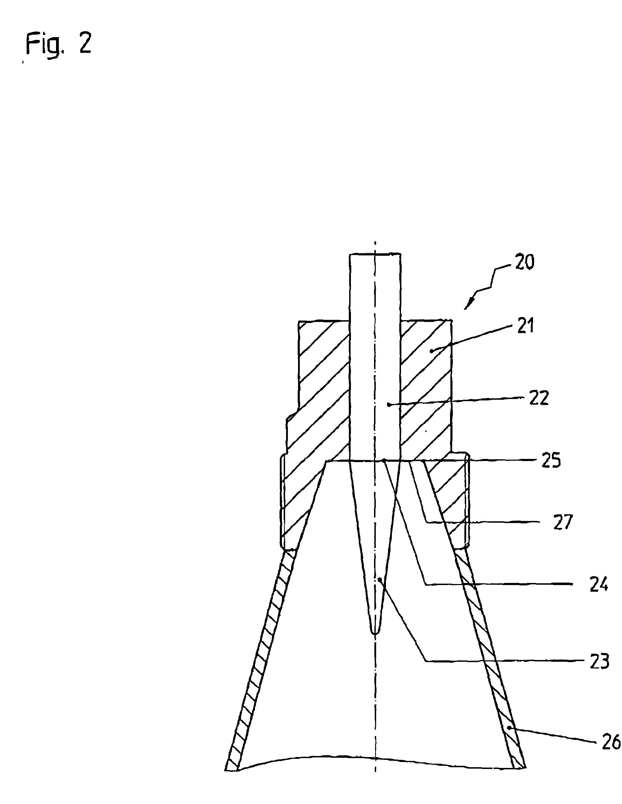

Fig. 2 zeigt schematisch eine andere erfindungsgemäße Ausführungsform der Sende-/Empfangsvorrichtung eines Mikrowellen-Füllstandsmeßgerätes. Hierbei weist der Hohlleitermantel (21) an der Grundfläche (24) des Tapers (23) eine in der Ebene der Grundfläche (24) des Tapers (23) liegende Ringschulter (27) auf. Der Bereich (25) in dem der Hohlleitermantel (21) beginnt, sich trichterförmig aufzuweiten, ist, entsprechend senkrecht zur Längsachse des Tapers, radial auswärts versetzt.

## Patentansprüche

1. Mikrowellen-Füllstandsmeßgerät mit einer Mikrowellen- Sende- und Empfangsvorrichtung, die eine Antenne und eine Antennenspeisung mit einem Hohlleiter umfaßt, der eine von einem Hohlleitermantel umgebene Hohlleiterfüllung aufweist, wobei der antennenwärts gerichtete (End-)Bereich der Hohlleiterfüllung mit einem insbesondere etwa kegelförmigen Anpaßteil (Taper) mit einer zur Längsachse von Hohlleiterfüllung und Taper im wesentlichen senkrechten, insbesondere kreisförmig begrenzten Grundfläche ausgestattet ist,
**dadurch gekennzeichnet, daß** der Hohlleitermantel (11, 21) in der Ebene der Grundfläche (14) des Tapers (13) innenseitig einen größeren Umfang aufweist als die Grundfläche (14) des Tapers (13) oder sich in der Ebene der Grundfläche (14) des Tapers (13) bis zu einem solchen größeren Umfang erstreckt, und somit vom Taper radial auswärts versetzt ist.

2. Mikrowellen-Füllstandsmeßgerät nach Anspruch 1,
**dadurch gekennzeichnet, daß** der Hohlleitermantel (11) sich, in axialer Richtung des Hohlleiters, im Bereich der Grundfläche (14) des Tapers (13) antennenwärts im Innendurchmesser erweitert, insbesondere eine etwa kegelmantelförmige Innenfläche aufweist.

3. Mikrowellen-Füllstandsmeßgerät nach Anspruch 1 und 2,
**dadurch gekennzeichnet, daß** die Hohlleiterfüllung (12) aus Keramik besteht.

4. Verwendung eines Mikrowellen-Füllstandsmeßgerätes gemäß einem der Ansprüche 1 bis 3 zur Verbesserung der Signalqualität unabhängig von Kondensatbildung am Gerät.

## Claims

1. A microwave level gauge having a microwave transmitting and receiving device comprising an antenna and an aerial feed with a hollow waveguide, which has a hollow waveguide charge surrounded by a hollow waveguide sheath, wherein a (end) portion of the hollow waveguide charge directed against the antenna is provided with a matching part (taper), in particular having a nearly conical form, and having a particularly circular limited base surface, which is substantially perpendicular relative to the longitudinal axis of the hollow waveguide charge and the taper,
**characterized in that** the hollow wave guide sheath (11, 21) has a larger inside circumference in the plane of the base surface (14) of the taper (13) than the base surface (14) of the taper (13), or extends in the plane of the base surface (14) of the taper (13) up to such a larger circumference, and is thus displaced from the taper in a radially outward direction.

2. Microwave level gauge according to claim 1,
**characterized in that** the hollow waveguide sheath (11) extends its inner diameter, in the axial direction of the hollow waveguide, in the area of the base surface (14) of the taper (13) in the direction of the antenna, and has an inner surface in the form of substantially a cone-in-jacket.

3. Microwave level gauge according to claim 1 and 2,
**characterized in that** the hollow waveguide charge (12) consists of ceramic material.

4. Use of a microwave level gauge according to any one of claims 1 - 3 for improving the signal quality, independently of the formation of condensate on the device.

## Revendications

1. Appareil à micro-ondes de mesure de niveau de contenu, équipé d'un dispositif d'émission et de réception comprenant une antenne et une alimentation d'antenne avec un guide d'ondes qui se présente sous la forme d'un matériau de remplissage entouré d'une gaine, dont l'extrémité, côté antenne, est équipée d'un manchon d'adaptation, légèrement conique de préférence (raccord conique («taper»)), dont la base, limitée par un cercle, est située perpendiculairement à l'axe longitudinal formé par le matériau de remplissage et le raccord,
**caractérisé en ce que** la gaine du guide d'ondes (11, 21) présente au niveau de la base (14) du guide d'ondes (13), à l'intérieur, une section plus importante que celle de la base (14) du guide d'ondes (13) ou s'étend au niveau de la base (14) du guide d'ondes (13) jusqu'à cette section plus importante et, de ce fait, est décalée radialement vers l'extérieur par rapport au guide d'ondes.

2. Appareil à micro-ondes de mesure de niveau de contenu selon la revendication 1,
**caractérisé en ce que** la gaine du guide d'ondes (11) s'élargit dans son diamètre intérieur, dans le sens de l'axe du guide d'ondes, au niveau de la base (14) du guide d'ondes (13), en direction de l'antenne et présente notamment une surface intérieure légèrement conique.

3. Appareil à micro-ondes de mesure de niveau de contenu selon les revendications 1 et 2,
**caractérisé en ce que** le matériau de remplissage du guide d'ondes (12) est constitué de céramique.

4. Mise en oeuvre d'un appareil à micro-ondes de mesure de niveau de contenu selon l'une des revendications 1 à 3, avec une qualité de signal améliorée, indépendamment de la formation de condensation sur l'appareil.
